# EUROPEAN PATENT SPECIFICATION

(11) **EP 3 437 289 B1**
(45) Date of publication and mention of the grant of the patent: **15.07.2020**
(21) Application number: 17707911.8
(22) Date of filing: 03.03.2017
(51) Int. Cl.: H04L 29/06, H04L 29/08, H04L 9/32, H04W 4/00

(54) **UNTRUSTED CODE DISTRIBUTION**
UNSICHERE CODEVERTEILUNG
DISTRIBUTION DE CODE NON SÉCURISÉ

(30) Priority: 30.03.2016 WO PCT/EP2016/162920
(43) Date of publication of application: 06.02.2019
(73) Proprietor: British Telecommunications public limited company, London EC1A 7AJ (GB)
(72) Inventor: DANIEL, Joshua, London EC4V 5BT (GB); DUCATEL, Gery, London EC4V 5BT (GB); ZOUALFAGHARI, Mohammad, London EC4V 5BT (GB)
(74) Representative: British Telecommunications public limited company Intellectual Property Department
(86) International application number: PCT/EP2017/055094
(87) International publication number: WO 2017/167549

(56) References cited:
- WO-A1-2013/172750
- WO-A2-2015/179020
- FLORIAN TSCHORSCH ET AL: "Bitcoin and Beyond: A Technical Survey on Decentralized Digital Currencies", INTERNATIONAL ASSOCIATION FOR CRYPTOLOGIC RESEARCH,, vol. 20150517:090557, 15 May 2015 (2015-05-15), pages 1-37, XP061018443,

## Description

The present invention relates to the distribution of code to computing devices. In particular it relates to distribution of code in a trusted manner.

Devices are increasingly becoming network connected by persistent, regular, intermittent or occasional connection to computer networks or network connected servers for communication with clients, servers, each other, publication of information, data collection, data capture or other purposes. This trend has been described as developing an "internet of things" (loT) in which devices of many potentially disparate kinds and purposes are network connected, including, inter alia: domestic appliances and equipment; utility supply and control apparatus such as energy supply and control; commercial machinery and plant; vehicles; sensors and detectors; lighting; heating; media devices including audio and video; medical devices; learning aids; timepieces; data storage devices; food preparation and storage devices; agricultural apparatus; human and animal monitoring devices; personal possessions; articles of fashion including clothing and footwear; roadside apparatus such as traffic monitors; street furniture; distributed computing or other processing devices; and many other devices and apparatus as will be apparent to those skilled in the art. The motivation for network connection of such devices can be varied including, for example: a desire to share information about a state, configuration, presence, environment, locality or arrangement of a device; communication of events, alerts, states or state changes relating to a device; for multiple devices to collaborate, coexist, cooperate, communicate or the like; to generate sensory output for subsequent consumption, recording or the like; for control of devices such as by network configuration, control, installation, modification, operation and the like; and many other purposes as will be apparent to those skilled in the art.

Notably, a network connection for any or all such devices may not be constant or persistent. in the sense that a network connection can be provided or obtained only occasionally for the purpose sending and/or receiving data. Alternatively, some devices may be network connected by proxy through a network connected other device such as a hub, server, agent or the like with such connection to the other device itself being potentially non-permanent or non-persistent. For example, some devices may be suitable for connection to a proxy or agent such as by a proximity network technology such as a Bluetooth, local wireless or short-range radio network. In such embodiments the proxy or agent may not be permanently located so as to engage in communication with all devices and may instead move or be relocated periodically or as required to communicate with devices to provide a network connection or even to receive data for transmission to the network and send data for receipt from the network by the device, such actual transmissions taking place later when such proxy or agent is itself network connected. Despite the absence of permanent and/or persistent network connections for such devices, they shall nonetheless be considered "network connected" for the purpose of the present description.

A benefit of network connection for devices is the opportunity for devices to be reprogrammed, reconfigured, adapted, supplemented, modified, updated and/or revised based on data received via the network. For example, a function of a particular network connected device can be embodied in software such as a software application for execution by the network connected device. Such software can be revised or replaced by communicating new or updated software via the network. A common example of this is a firmware for a device, updates for which can be received via a network.

Each network connected device presents a potential vulnerability to a network and other devices connected thereto which malicious agents or entities might seek to exploit for malicious purposes. For example, network connected devices can be subject to spoofing, unauthorised access, unauthorised modification and/or unauthorised use. Such network connected devices can be furnished with little processing resource (so as to reduce manufacturing and operating costs, for example) and traditional security mechanisms such as intrusion detection services, antimalware services, firewalls and antivirus services may be difficult to accommodate for or by the device without unduly impacting the limited resource of the device or other operation of the device or may simply be too costly in view of the value or cost of the device. Additionally, the nature of some network connected devices can render them unable or ill-equipped to authenticate themselves to a network or other network connected entity, such as due to limitations of resource of the device or due to the economics of providing such facilities for very large numbers of such devices. Accordingly, the nature of network connected devices and their operation can mean that communications and communicating entities are essentially untrusted and certainty in the reliability and appropriateness of received data is not assured.

Consequently, a range of challenges for network connected devices arise. For example, devices receiving executable code via a network cannot readily confirm that received code is trusted and that the code is intended for the device. While code can be hashed and/or signed such mechanisms can be vulnerability to spoofing or other threats, especially in a network subject to potential interception, intermediary insertion and the like. For example, data and an accompanying hash communicated by an originating server can be intercepted and replaced with a new valid hash. Thus hashing and signing of communications payloads can be made to look genuine and/or can be difficult for a receiving entity to verify especially where multiple intermediate distribution components are involved in a distribution network. It would therefore be advantageous to address these challenges.

Document WO2013/172750 A1 discloses a serving node that generates a hash sequence from an original random number and stores this in its storage device. The serving node sends an initialisation message to the devices (e.g. M2M devices), wherein the initialisation message includes the starting index for the hash chain, and the hash value for said index. The initialisation message may be protected using a suitable system to ensure that it cannot be intercepted and read by a third party. When the serving node wishes to wake up one of the devices, it broadcasts a paging message in the time slot watched by the device, said paging message including a device identifier, instructions to wake up the device and the next hash value in the sequence. The device confirms the validity of the received hash value and that the message has therefore really come from the serving node. The device then carries out the instructions contained in the paging message (e.g. wake up, prepare to receive additional message, carry out measurement and report, etc.).

The present invention accordingly provides, in a first aspect, a computer implemented method for code distribution by a base station to a target device via a network, the distribution being made via one or more distribution servers arranged between the base station and the target device on the network, the method comprising: the base station maintaining a blockchain data structure storing one or more blocks and having a state determined by a most recently committed block in the blockchain; the base station generating a new transaction for storage in the blockchain corresponding to code for distribution by the base station to a defined list of network connected devices including the target device, the new transaction including a hash value for the code and the list of network connected devices, wherein the new transaction is stored and committed as a new block in the blockchain such that the blockchain has a new current state, the new block having associated a hash value based on the contents of the new transaction and a hash value evaluated for a block corresponding to a preceding state in the blockchain; sending the code, the defined list of devices and the hash value for the code and the defined list of devices to the target device via the one or more distribution servers; and broadcasting the current state of the blockchain for receipt by target device such that the target device is able to verify the code and the suitability of the code for the target device.

Preferably the blockchain data structure is a sequential transactional database accessible via the network.

Preferably the blockchain data structure is stored locally to the base station.

Preferably the base station is one of a plurality of base stations and the blockchain data structure is shared by the base stations.

Preferably the broadcast is achieved via the network.

Prefrerably the broadcast is achieved via a communication channel other than the network.

Preferably the broadcast is achieved by a wireless radio broadcast.

Preferably the verifying the code and the suitability of the code by the target device includes: comparing the hash values of the code and the defined list of devices with corresponding hash values in the broadcast current state of the blockchain; and verifying the current state of the blockchain with reference to a previous state of the blockchain accessible by the target device.

Preferably the previous state of the blockchain is accessible to the target device by way of all or part of the blockchain data structure being accessible to the target device.

Preferably the previous state of the blockchain is previously received and stored by the target device.

The present invention accordingly provides, in a second aspect, a computer system including a processor and memory storing computer program code for performing the steps described above.

The present invention accordingly provides, in a third aspect, a computer program element comprising computer program code to, when loaded into a computer system and executed thereon, cause the computer to perform the steps of the method set out above.

A preferred embodiment of the present invention will now be described, by way of example only, with reference to the accompanying drawings, in which:
Figure 1 is a block diagram of a computer system suitable for the operation of embodiments of the present invention;
Figure 2 is a component diagram of an arrangement for the distribution of code by a base station in accordance with an embodiment of the present invention;
Figure 3 is a flow diagram of a method for code distribution by a base station to a target device via a network in accordance with an embodiment of the present invention;
Figure 4 is a component diagram of an alternative arrangement for the distribution of code by a base station in accordance with an embodiment of the present invention; and
Figure 5 is a flow diagram of a method for receiving code distributed by a base station at a target device via a network in the alternative arrangement of Figure 4 in accordance with an embodiment of the present invention.

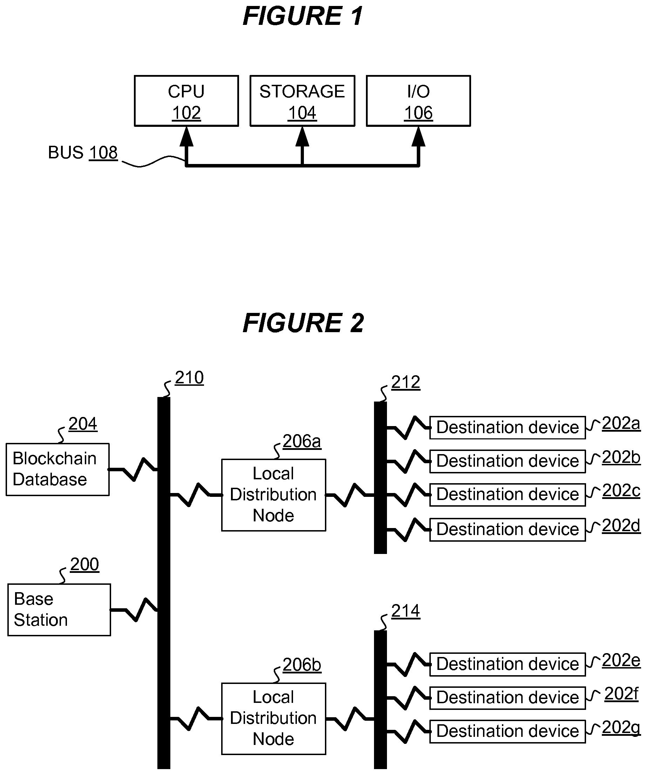

Figure 1 is a block diagram of a computer system suitable for the operation of components in embodiments of the present invention. A central processor unit (CPU) 102 is communicatively connected to storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for the distribution of code by a base station 200 in accordance with an embodiment of the present invention. The base station 200 is a network connected entity embodied in hardware, software, firmware or a combination and constitutes a source of code for distribution to one or more destination devices 202a to 202g as target destination devices 200. The base station 200 is communicatively connected to a computer network 210 such as a wired or wireless network whether physical or virtual for the communication of data, messages, information and the like thereby. For example, the base station 200 is a network connected computer system such as a server computer system for providing software code updates, revisions, replacements or firmware updates or the like to selected destination devices 202. Such code is therefore associated with a defined list of network connected devices 202 (i.e. one or more of destination devices 202) to which the code is to be sent for execution.

The destination devices 202a to 202g are network connected devices such as computer systems, computing components, processors, hardware, software, firmware, physical or virtual devices and/or appliances. The destination devices 202 can be connected to different computer networks 212, 214 which may or may not be interconnected by any suitable network topology and may or may not be one and the same network. Furthermore, either or both of the computer networks 212, 214 to which the destination devices 202 connect may or may not be interconnected with a computer network 210 to which the base station 200 is connected and may or may not be one and the same as the computer network 210 of the base station. The destination devices 202 can be any suitable network connected devices such as devices commonly referred to as loT devices.

While the destination devices 202 are network connected, the nature of the network connection need not necessarily be persistent, permanent or consistent. As previously described, the network connection of such devices may be intermittent, periodic and/or dependent on other devices such as agents or other entities having or providing network connection thereby, by proxy or even in a disconnected manner with network communication being achieved asynchronously via such agent entity.

The destination devices 202 receive code from one or more distribution nodes. Distribution nodes 206a, 206b are hardware, software, firmware or combination components such as computer systems for receiving code from one or more base stations 200 and distributing the code to destination devices 202. By way of example in Figure 2, a first subset of the destination devices 202a to 202d operate in communication with a first local distribution node 206a and a second subset of the destination devices 202e to 202g operate in communication with a second local distribution node 206b. For example, each distribution node may be local to each respective subset of destination devices 202 based on locality, network location or may exhibit compatibilities in respect of architecture of one or more of the network, hardware, software, firmware or other characteristics of the destination devices 202.

The base station 200 further maintains a blockchain data structure 204 storing one or more blocks and having a state determined by a most recently committed block in the blockchain. While the blockchain 204 of Figure 2 is illustrated as distinct and separate to the base station 200 for access by the base station 200 via the network 210, it will be appreciated by those skilled in the art that the blockchain 204 could alternatively be integrated with, local to or otherwise accessible to the base station 200.

The blockchain database 204 is a sequential transactional database that may be distributed and shared by multiple entities such as base station 200. For example, multiple base stations 200 could be provided and the blockchain 204 can be shared by multiple base stations 200. Distributed sequential transactional databases are well known in the field of cryptocurrencies and are documented, for example, in "Mastering Bitcoin. Unlocking Digital Crypto-Currencies." (Andreas M. Antonopoulos, O'Reilly Media, April 2014). For convenience, such a database is herein referred to as a blockchain 206 though it will be appreciated that other suitable databases, data structures or mechanisms possessing the characteristics essential for embodiments of the present invention could alternatively be used. Typically, a blockchain database is a distributed chain of block data structures accessed by a network of nodes, often referred to as a network of miners. Each block in a blockchain includes a one or more data structures, and in some exemplary blockchains a Merkle tree of hash or digest values for transactions included in a block are used to arrive at a hash value for a block which is itself combined with a hash value for a preceding block to generate a chain of blocks (i.e. a blockchain). A new block of one or more transactions is added to the blockchain by such miner software, hardware, firmware or combination systems in, for example, a miner network. A newly added block constitutes a current state of the blockchain. Such miners undertake validation of substantive content of transactions (such as any criteria defined therein) and adds a block of one or more new transactions to a blockchain as a new blockchain state when a challenge is satisfied as a "proof-of-work", typically such challenge involving a combination hash or digest for a prospective new block and a preceding block in the blockchain and some challenge criterion. Thus miners in a miner network may each generate prospective new blocks for addition to the blockchain. Where a miner satisfies or solves a challenge and validates the transactions in a prospective new block such new block is added to the blockchain. Accordingly, a blockchain provides a distributed mechanism for reliably verifying a data entity such as an entity constituting or representing the potential to consume a resource.

In embodiments of the present invention, the blockchain 204 accessed by the base station 200 can be somewhat simplified yet still provide the benefits of the present invention. In particular, the base station 200 can conceivably be the only entity that accesses the blockchain 204 directly to create new transactions for the blockchain 204 and to confirm transactions as new blocks in the blockchain 204. Further, each block in the blockchain 204 can conceivably consist of only a single transaction, each transaction representing a new distribution of code for selected destination devices 202. The proof-of-work requirement can be dispensed with in some embodiments of the present invention in view of the limited or exclusive access to the blockchain 204. Accordingly, in some embodiments of the present invention the blockchain 204 is a type of private blockchain accessed and maintained by the base station 200.

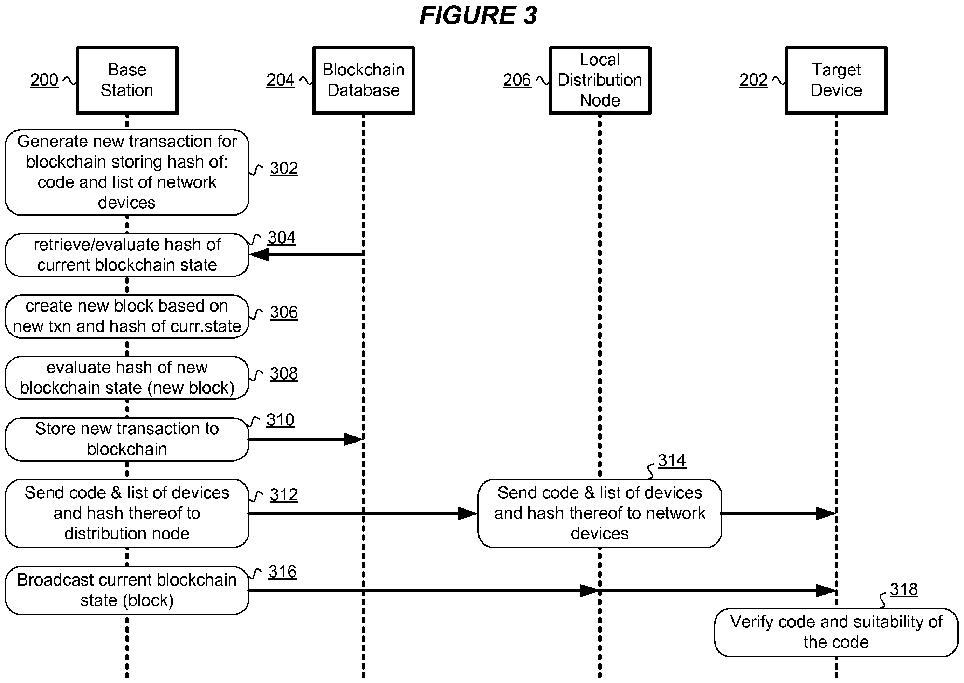

The arrangement of Figure 2 will now be described in use for the distribution of code to a particular one of the destination devices as a target device 202 with reference to Figure 3. The code has associated a defined list of destination devices 202 as network connected devices by which the code is to be received and executed. Figure 3 is a flow diagram of a method for code distribution by a base station to a target device via a network in accordance with an embodiment of the present invention. Initially, at step 302, the base station 200 generates a new transaction for the blockchain 204. The new transaction includes a hash value generated by a hashing function for the code and the list of defined list network devices. Subsequently, at step 304, the base station 200 evaluates or retrieves a hash value for a current state of the blockchain 204 as a hash of the current state (latest block) of the blockchain 204. This can be determined from the blockchain 204 itself. At step 306 the base station 200 creates new block for blockchain 204 consisting of the new transaction generated at step 302 and the hash of the current state (latest block) of the blockchain 204 obtained at step 304. The new block will constitute a new state of the blockchain 204. At step 308 the base station 200 evaluates a hash of the new block and stores the new block, along with its hash, to the blockchain database 204 at step 310.

Subsequently, at step 312, the base station 200 communicates the code, list of defined network devices and the hash value thereof (i.e. the hash value of the code and list of defined network devices evaluated at step 302) to one or more local distribution nodes 206. At step 314 the local distribution node(s) 206 send the code, list of defined network devices and hash value thereof to a target device 202 as one of the network connected destination devices. Subsequently, at step 316, the base station 200 broadcasts the current state of the blockchain 204 to all or a subset of the destination devices 202a to 202g including the target device 202. The broadcast at step 316 can be achieved via one or more of the computer networks 210, 212, 214 which may, therefore, occur via the local distribution node(s) 206. Alternatively, the broadcast can be achieved by a communication channel other than one or more of the networks 210, 212, 214 such as a wireless radio broadcast or a broadcast via one or more different network(s). The effect of the broadcast is receipt, by the target device 202, of the current state 204 of the blockchain.

The target device thus receives the code, list of defined network devices and hash value thereof from the local distribution node 206. Further, the target device receives the current state of the blockchain 204 by way of the broadcast. The target devices 202 is therefore able, at step 318, to verify the code in order to trust that the code originates from the base station 200 and to verify whether the code is suitable for the target device. The verification that the code and list of network devices originate from the base station 200 can be achieved by comparison of a hash of the code and list with the current blockchain state 316 that includes the hash of the code and list directly from the base station 200. On this basis, the target device 202 can verify the suitability of the code by checking the defined list of network connected devices for a reference to the target device 202. Thus, in this way target device can execute received code when it is verified to be suitable and originates from the base station 200 without a need to trust the local distribution node 206 from which the code is received. Furthermore, the distribution mechanism for code (e.g. via networks 210, 212, 214 and involving potentially multiple distribution nodes 206) is maintained and a broadcast is required only for a current state of the blockchain 204. The current state of the blockchain 204 is not sensitive information (the code and list of destination devices are not / need not be included) and is relatively small (e.g. consisting only of hash values) so it's wide broadcast is acceptable.

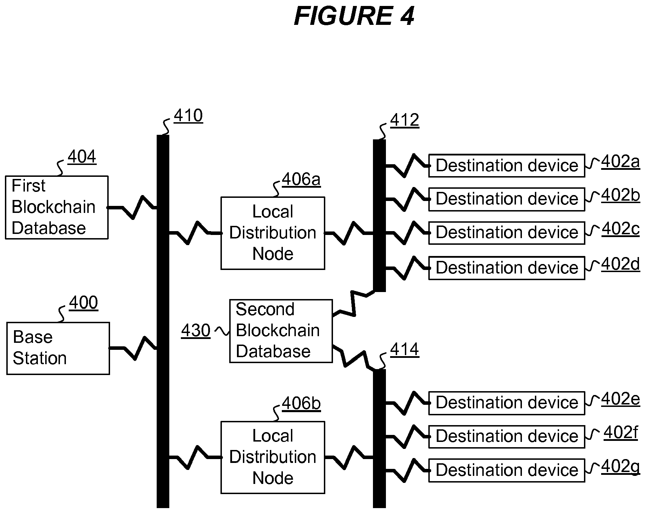

One remaining threat is the possibility that the blockchain status broadcast is spoofed such that a malicious entity generates a fake or manipulated blockchain status broadcast such as a broadcast seeking to confirm the validity of malicious code and/or list of destination devices. For example, a rogue or malicious entity could seek to install malware on a set of destination devices (or all destination devices) and so intercepts distribution of code by the base station 200 and distribution nodes 206 and modifies or replaces the package with malicious code and a broadly defined list of target destination devices and having correctly calculated hash values. Such a malicious entity could generate a corresponding blockchain state for broadcast to substantiate the distributed code which could be received and verified by a target device 202 and executed. One approach to address this challenge is to provide access to a preceding state of the blockchain 204 for the target device 202. Thus, where target device 202 has access to a blockchain state (i.e. a previous committed block) immediately preceding a new blockchain state received by the broadcast, the target device 202 is able to verify the new blockchain state really does belong to the blockchain 204 to succeed the previous state based on the hash value of the new blockchain state. This is possible because each subsequent block in the blockchain 204 includes the hash of the previous block and so a hash of a subsequent block is tied to the previous block so providing the secure and reliable chain of blocks. Such an approach requires that each destination device 202 has access to a preceding block which can be achieved if, for example, each device 202 is provided with an initial or other previous block and receives all subsequent blocks to update its record of a most recent block. Alternatively, the blockchain 204 can be adapted to be accessible to the destination devices 202, although such an arrangement arguable involves the additional challenge of verifying that the accessed blockchain is the authentic one. Accordingly, an alternative approach to address this challenge is considered and described below with respect to Figure 4.

Figure 4 is a component diagram of an alternative arrangement for the distribution of code by a base station 400 in accordance with an embodiment of the present invention. Many of the features of Figure 4 are identical to those described above with respect to Figure 2 and these will not be repeated here. In Figure 4 the blockchain of the base station is referred to as a first blockchain 404 and the arrangement additionally includes a second blockchain database 430 as a shared blockchain 430 accessible to multiple destination devices 402. In one embodiment the second blockchain 430 is accessible to all destination devices 402 and local distribution nodes 406. The second blockchain 430 is a further sequential transactional database though the second blockchain 430 may differ from the first in some embodiments in that the second blockchain 430 is mined by miner components to validate blocks in the second blockchain 430. In this way blocks in the second blockchain 430 are verifiable by multiple or all destination devices 402 (and, in some embodiments, distribution nodes 406). The current state of the second blockchain 430 stores a most recently received state of the first blockchain 404. The current state of the second blockchain 430 is validated by multiple miners based on their received information about the first blockchain 404, such as current state information for the first blockchain 404 received by broadcast messages. Such miners may be required to perform a proof-of-work in order to commit their proposed block to the second blockchain 430 and, over time, other miners will be able to determine whether they can confirm or refute the validity of a committed block based on their own understanding of the state of the first blockchain 404. Thus the second blockchain 430 operates more as a traditional blockchain data structure for the evaluation and storage of new blocks by miners that can be confirmed by other miners to arrive, over time, at a consensus state of the second blockchain 430.

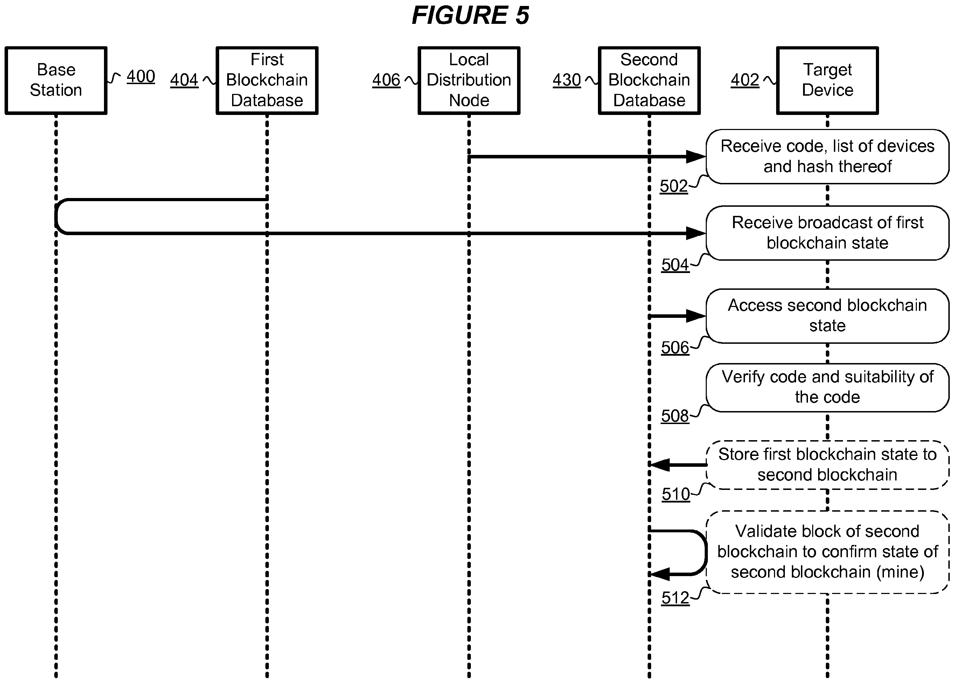

These features of the second blockchain 430 serve a useful purpose when destination devices 402 seek to determine if receive code originates from a base station 400 and the suitability of the code. A target device 402 can refer to the consensus state of the second blockchain 430 to determine a validated state of the first blockchain 404 to verify received code and list of devices before executing the code. The method of this process will now be considered in use with reference to Figure 5.

Figure 5 is a flow diagram of a method for receiving code distributed by a base station 400 at a target device 402 via a network in the alternative arrangement of Figure 4 in accordance with an embodiment of the present invention. Initially, at step 502, the target device receives new code, a list of network connected devices and a hash thereof from a local distribution node 406. The target device 402 need to determine if the code and list can be trusted in order to determine the suitability of the code for the target device 402. Thus, at step 504 the target device 402 receives a current state of the first blockchain 404 such as from the base station 400 as a broadcast message. Such a broadcast message can be as previously described. At step 506 the target device 402 accesses a state of a second blockchain 430 which stores a consensus agreed state of the first blockchain 404. The consensus agreed state stored in the second blockchain 430 may not be reliable until a period of time has passed as miners (such as other destination devices and/or distribution nodes) generate and/or confirm the current state of the second blockchain 430. Thus, in one embodiment the second blockchain 430 is used to store a preceding state of the first blockchain 404 that precedes a new state of the first blockchain 404 received at step 504. In this way the need for time to allow a consensus on the preceding state of the first blockchain 404 to be agreed and committed to the second blockchain 430 can be accommodated since the second blockchain 430 is employed to store a previous state of the first blockchain.

In this way the target device 402 receives the code, the list of destination devices for the code, and sufficient reliable information to confirm (at step 508) the validity and authenticity of the code and list by way of a new state of the first blockchain 404 by the broadcast and the preceding state of the first blockchain 404 by the second blockchain 430 state. The validity and authenticity is confirmed by comparing hash values as previously described. Accordingly, the target device is able to determine the reliability and suitability of the code for execution without recourse to unreliable, potentially spoofed or tampered code, lists or state of the first blockchain 404.

Subsequent to the verification at step 508 the target device optionally participates as a miner for the second blockchain 430 and seeks to store the state of the first blockchain 404 received at step 504 to the second blockchain 430. Such storage may additionally require a proof-of-work task, such as the achievement of a particular hash value for a proposed new block conforming to a predefined rule. Subsequently at step 512 the second blockchain 430 can be validated by the target device 402 and other miners to arrive at a consensus state of the second blockchain 430.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

## Claims

1. A computer implemented method for code distribution by a base station to a target device via a network, the distribution being made via one or more distribution servers arranged between the base station and the target device on the network, the method comprising:
the base station maintaining a blockchain data structure storing one or more blocks and having a state determined by a most recently committed block in the blockchain;
the base station generating a new transaction for storage in the blockchain corresponding to code for distribution by the base station to a defined list of network connected devices including the target device, the new transaction including a hash value for the code and the list of network connected devices, wherein the new transaction is stored and committed as a new block in the blockchain such that the blockchain has a new current state, the new block having associated a hash value based on the contents of the new transaction and a hash value evaluated for a block corresponding to a preceding state in the blockchain;
sending the code, the defined list of devices and the hash value for the code and the defined list of devices to the target device via the one or more distribution servers; and
broadcasting the current state of the blockchain for receipt by target device such that the target device is able to verify the code and the suitability of the code for the target device.

2. The method of claim 1 wherein the blockchain data structure is a sequential transactional database accessible via the network.

3. The method of claim 1 wherein the blockchain data structure is stored locally to the base station.

4. The method of any of claims 1 or 2 wherein the base station is one of a plurality of base stations and the blockchain data structure is shared by the base stations.

5. The method of any preceding claim wherein the broadcast is achieved via the network.

6. The method of any of claims 1 to 4 wherein the broadcast is achieved via a communication channel other than the network.

7. The method of any preceding claim wherein the broadcast is achieved by a wireless radio broadcast.

8. The method of any preceding claim wherein the verifying the code and the suitability of the code by the target device includes: comparing the hash values of the code and the defined list of devices with corresponding hash values in the broadcast current state of the blockchain; and verifying the current state of the blockchain with reference to a previous state of the blockchain accessible by the target device.

9. The method of claim 8 wherein the previous state of the blockchain is accessible to the target device by way of all or part of the blockchain data structure being accessible to the target device.

10. The method of claim 8 wherein the previous state of the blockchain is previously received and stored by the target device.

11. A computer system including a processor and memory storing computer program code for performing the steps of any preceding claim.

12. A computer program element comprising computer program code to, when loaded into a computer system and executed thereon, cause the computer to perform the steps of a method as claimed in any of claims 1 to 10.

## Patentansprüche

1. Computerimplementiertes Verfahren zur Codeverteilung durch eine Basisstation an ein Zielgerät über ein Netz, wobei die Verteilung über einen oder mehrere zwischen der Basisstation und dem Zielgerät im Netz angeordnete Verteilungsserver vorgenommen wird, wobei das Verfahren Folgendes umfasst:
Aufrechterhalten einer Blockchain-Datenstruktur, die einen oder mehrere Blöcke speichert und einen Zustand, der durch einen zuletzt festgeschriebenen Block in der Blockchain bestimmt wird, aufweist, durch die Basisstation;
Generieren einer neuen Transaktion zur Speicherung in der Blockchain, die mit Code zur Verteilung durch die Basisstation an eine definierte Liste von netzverbundenen Geräten, die das Zielgerät enthält, korrespondiert, durch die Basisstation, wobei die neue Transaktion einen Hashwert für den Code und die Liste von netzverbundenen Geräten enthält, wobei die neue Transaktion als ein neuer Block in der Blockchain gespeichert und festgeschrieben wird, sodass die Blockchain einen neuen aktuellen Zustand aufweist, wobei mit dem neuen Block ein Hashwert, der auf den Inhalten der neuen Transaktion basiert, und ein Hashwert, der für einen mit einem vorhergehenden Zustand in der Blockchain korrespondierenden Block ermittelt wird, assoziiert sind;
Senden des Codes, der definierten Liste von Geräten und des Hashwerts für den Code und die definierte Liste von Geräten über den einen oder die mehreren Verteilungsserver an das Zielgerät; und
Rundsenden des aktuellen Zustands der Blockchain zum Empfang durch das Zielgerät, sodass das Zielgerät den Code und die Eignung des Codes für das Zielgerät verifizieren kann.

2. Verfahren nach Anspruch 1, wobei die Blockchain-Datenstruktur eine sequenzielle Transaktionsdatenbank, auf die über das Netz zugegriffen werden kann, ist.

3. Verfahren nach Anspruch 1, wobei die Blockchain-Datenstruktur lokal in der Basisstation gespeichert wird.

4. Verfahren nach Anspruch 1 oder 2, wobei die Basisstation eine von mehreren Basisstationen ist und die Blockchain-Datenstruktur von den Basisstationen gemeinsam genutzt wird.

5. Verfahren nach einem vorhergehenden Anspruch, wobei die Rundsendung über das Netz realisiert wird.

6. Verfahren nach einem der Ansprüche 1 bis 4, wobei die Rundsendung statt über das Netz über einen anderen Kommunikationskanal realisiert wird.

7. Verfahren nach einem vorhergehenden Anspruch, wobei die Rundsendung durch eine drahtlose Rundfunkübertragung realisiert wird.

8. Verfahren nach einem vorhergehenden Anspruch, wobei das Verifizieren des Codes und der Eignung des Codes durch das Zielgerät Folgendes enthält: Vergleichen der Hashwerte des Codes und der definierten Liste von Geräten mit korrespondierenden Hashwerten im rundgesendeten aktuellen Zustand der Blockchain; und Verifizieren des aktuellen Zustands der Blockchain mit Bezug zu einem vorherigen Zustand der Blockchain, auf den das Zielgerät zugreifen kann.

9. Verfahren nach Anspruch 8, wobei das Zielgerät über die gesamte Blockchain-Datenstruktur, auf die das Zielgerät zugreifen kann, oder einen Teil der Blockchain-Datenstruktur auf den vorherigen Zustand der Blockchain zugreifen kann.

10. Verfahren nach Anspruch 8, wobei der vorherige Zustand der Blockchain durch das Zielgerät vorher empfangen und gespeichert wird.

11. Computersystem, das einen Prozessor und einen Speicherbaustein, der Computerprogrammcode zum Durchführen der Schritte nach einem vorhergehenden Anspruch speichert, enthält.

12. Computerprogrammelement, das Computerprogrammcode, um, wenn er in ein Computersystem geladen und in ihm ausgeführt wird, zu bewirken, dass der Computer die Schritte eines Verfahrens nach einem der Ansprüche 1 bis 10 durchführt, umfasst.

## Revendications

1. Procédé mis en œuvre par ordinateur pour la distribution de code par une station de base à un dispositif cible par l'intermédiaire d'un réseau, la distribution étant effectuée par l'intermédiaire d'un ou plusieurs serveurs de distribution disposés entre la station de base et le dispositif cible sur le réseau, le procédé comprenant les étapes suivantes :
le maintien, par la station de base, d'une structure de données en chaîne de blocs stockant un ou plusieurs blocs et ayant un état déterminé par le bloc le plus récemment engagé dans la chaîne de blocs ;
la génération, par la station de base, d'une nouvelle transaction pour le stockage dans la chaîne de blocs correspondant à un code pour la distribution par la station de base à une liste définie de dispositifs connectés au réseau comprenant le dispositif cible, la nouvelle transaction comprenant une valeur de hachage pour le code et la liste de dispositifs connectés au réseau, où la nouvelle transaction est stockée et engagée comme un nouveau bloc dans la chaîne de blocs de telle sorte que la chaîne de blocs ait un nouvel état courant, le nouveau bloc étant associé à une valeur de hachage basée sur le contenu de la nouvelle transaction et une valeur de hachage évaluée pour un bloc correspondant à un état précédent dans la chaîne de blocs ;
l'envoi du code, de la liste définie de dispositifs et de la valeur de hachage pour le code et de la liste définie de dispositifs au dispositif cible par l'intermédiaire des un ou plusieurs serveurs de distribution ; et
la diffusion de l'état courant de la chaîne de blocs pour une réception par un dispositif cible de sorte que le dispositif cible puisse vérifier le code et l'adéquation du code au dispositif cible.

2. Procédé selon la revendication 1, dans lequel la structure de données de la chaîne de blocs est une base de données transactionnelle séquentielle accessible par l'intermédiaire du réseau.

3. Procédé selon la revendication 1, dans lequel la structure de données de la chaîne de blocs est stockée localement dans la station de base.

4. Procédé selon l'une quelconque des revendications 1 ou 2, dans lequel la station de base est l'une d'une pluralité de stations de base et la structure de données de la chaîne de blocs est partagée par les stations de base.

5. Procédé selon l'une quelconque des revendications précédentes, dans lequel la diffusion est réalisée par l'intermédiaire du réseau.

6. Procédé selon l'une quelconque des revendications 1 à 4, dans lequel la diffusion est réalisée par l'intermédiaire d'un canal de communication autre que le réseau.

7. Procédé selon l'une quelconque des revendications précédentes, dans lequel la diffusion est réalisée par une diffusion radio sans fil.

8. Procédé selon l'une quelconque des revendications précédentes, dans lequel la vérification du code et de l'adéquation du code par le dispositif cible comprend :
la comparaison des valeurs de hachage du code et de la liste définie de dispositifs avec les valeurs de hachage correspondantes dans l'état courant de diffusion de la chaîne de blocs ; et la vérification de l'état courant de la chaîne de blocs en référence à un état précédent de la chaîne de blocs accessible par le dispositif cible.

9. Procédé selon la revendication 8, dans lequel l'état précédent de la chaîne de blocs est accessible au dispositif cible par l'intermédiaire de tout ou partie de la structure de données de la chaîne de blocs accessible au dispositif cible.

10. Procédé selon la revendication 8, dans lequel l'état précédent de la chaîne de blocs est préalablement reçu et stocké par le dispositif cible.

11. Système informatique comprenant un processeur et une mémoire stockant un code de programme informatique pour exécuter les étapes de l'une quelconque des revendications précédentes.

12. Élément de programme informatique comprenant un code de programme informatique pour, lorsqu'il est chargé dans un système informatique et exécuté sur celui-ci, amener l'ordinateur à exécuter les étapes d'un procédé tel que revendiqué dans l'une quelconque des revendications 1 à 10.
